# EUROPÄISCHE PATENTANMELDUNG

(11) **EP 1 500 539 A1**
(43) Veröffentlichungstag der Anmeldung: **26.01.2005**
(21) Anmeldenummer: 04017418.7
(22) Anmeldetag: 23.07.2004
(51) Int. Cl.: B60J 7/02

(54) **Öffnungsfähiges Fahrzeugdach**

(30) Priorität: 24.07.2003 DE 10333781
(71) Anmelder: Webasto AG, 82131 Stockdorf (DE)
(72) Erfinder: Wingen, Bernhard, 83620 Feldkirchen (DE)

(57) **Zusammenfassung**

Als Spoilerdach ausgebildetes öffnungsfähiges Fahrzeugdach mit mindestens einem Deckelträger (37) für einen Deckel (11), der mittels einer Ausstell- und Verschiebemechanik (14) aus einer Schließstellung, in der er eine Dachöffnung (12) verschließt, mit seiner Hinterkante durch Schwenken des Deckels ausstellbar und zum Freilegen der Dachöffnung in ausgestelltem Zustand in Dachlängsrichtung nach hinten verschiebbar ist. Der Deckelträger (37) ist mittels eines ersten Gleitelements (Gleitschuh 44) und eines zweiten Gleitelements (Gleiter 52), die in Dachlängsrichtung in Abstand voneinander angeordnet sind, entlang einer dachfesten Führung (15) in Dachlängsrichtung verschiebbar geführt und mit einer Kulissenbahn (40) versehen, mit der ein gleichfalls entlang der dachfesten Führung (15) in Dachlängsrichtung verschiebbar geführter Steuerschlitten (21) in Eingriff steht. Das zweite Gleitelement ist mit dem Deckelträger (37) über ein Koppelglied (Verriegelungshebel 50) verbunden, das an dem Deckelträger angelenkt ist. Mindestens während Schwenkbewegungen des Deckels ist das zweite Gleitelement über das Koppelglied in Abhängigkeit von der Bewegung des Steuerschlittens verstellbar.

## Beschreibung

Die Erfindung betrifft ein als Spoilerdach ausgebildetes öffnungsfähiges Fahrzeugdach mit mindestens einem Deckelträger für einen Deckel, der mittels einer Ausstell- und Verschiebemechanik aus einer Schließstellung, in der er eine Dachöffnung verschließt, mit seiner Hinterkante durch Schwenken des Deckels ausstellbar und zum Freilegen der Dachöffnung in ausgestelltem Zustand in Dachlängsrichtung nach hinten verschiebbar ist, wobei der Deckelträger mittels eines ersten Gleitelements und eines zweiten Gleitelements, die in Dachlängsrichtung in Abstand voneinander angeordnet sind, entlang einer dachfesten Führung in Dachlängsrichtung verschiebbar geführt und mit einer Kulissenbähn versehen ist, mit der ein gleichfalls entlang der dachfesten Führung in Dachlängsrichtung verschiebbar geführter Steuerschlitten in Eingriff steht.

Ein solches Fahrzeugdach ist aus DE 100 55 790 A1 bekannt. Dabei ist das erste Gleitelement ein am vorderen Ende des Deckelträgers schwenkbar gelagerter Gleitschuh, während als zweites Gleitelement ein mit dem Deckelträger fest verbundener Gleitschuh vorgesehen ist. Bei dem bekannten Aufbau der Ausstellund Verschiebemechanik für den Deckel ist es schwierig, die Deckelvorderkante im Zuge der Öffnungs- und Schließbewegungen genau so zu steuern, dass einerseits in der Deckelschließstellung ein einwandfreie Abdichtung im Bereich des Randspalts zwischen der Deckelvorderkante und dem vorderen Rand der Dachöffnung gewährleistet ist, ohne dass unerwünscht hohe Anpresskräfte notwendig werden, und dass andererseits ein Verquetschen oder jede andere übermäßige Beanspruchung der für diesen Randspaltbereich vorgesehenen Dichtungsanordnung vermieden wird, wenn der Deckel die Schließstellung verlässt oder in die Schließstellung einfährt.

Es ist Aufgabe der vorliegenden Erfindung, ein als Spoilerdach ausgebildetes öffnungsfähiges Fahrzeugdach zu schaffen, das mit relativ einfachen Mitteln eine verbesserte Steuerung der Bewegung der Deckelvorderkante insbesondere in den kritischen Phasen erlaubt, in denen der Deckel die Schließstellung verlässt und in die Schließstellung einfährt.

Diese Aufgabe wird erfindungsgemäß dadurch gelöst, dass bei einem Fahrzeugdach der eingangs genannten Art das zweite Gleitelement mit dem Deckelträger über ein Koppelglied verbunden ist, das an dem Deckelträger angelenkt ist, und dass mindestens während Schwenkbewegungen des Deckels das zweite Gleitelement über das Koppelglied in Abhängigkeit von der Bewegung des Steuerschlittens verstellbar ist.

Weil erfindungsgemäß das zweite Gleitelement mit dem Deckelträger nicht starr, sondern über ein Koppelglied verbunden ist, dem während Deckelschwenkbewegungen eine Zwangsbewegung eingeprägt ist, lässt sich die von der Deckelvorderkante beschriebene Bahnkurve ohne weiteres so einstellen, wie dies für die jeweilige Dachkonstruktion einschließlich der benutzten Dichtungsanordnung besonders günstig ist, um die zuvor skizzierten Anforderungen zu erfüllen.

Bevorzugte weitere Ausgestaltungen der Erfindung ergeben sich aus den Unteransprüchen.

So steht das Koppelglied mit dem Steuerschlitten bevorzugt über eine Kulissenanordnung in Wirkverbindung. Durch eine entsprechende Wahl der für diese Kulissenanordnung vorgesehenen Kulissenbahn kann der Verlauf der von der Deckelvorderkante beschriebenen Bahnkurve den jeweiligen konstruktiven Gegebenheiten des Fahrzeugdaches besonders flexibel angepasst werden.

Die Anlenkstelle des Koppelglieds an dem Deckelträger und das zweite Gleitelement sind zweckmäßig an gegenüberliegenden Längsenden des Koppelglieds angeordnet. Vorteilhaft weist die Kulissenanordnung eine in Längsrichtung des Koppelglieds verlaufende Kulissenbahn und einen mit dieser Kulissenbahn zusammenwirkenden Gleiter auf, der mit dem Steuerschlitten fest verbunden ist, wobei der einen Teil der Kulissenanordnung bildende Gleiter zugleich Teil einer Anordnung sein kann, über welche der Steuerschlitten mit der Kulissenbahn des Deckelträgers in Eingriff steht.

Die Ausstell- und Verschiebemechanik kann beispielsweise entsprechend einer bevorzugten Ausführungsform so ausgelegt sein, dass in unmittelbarer Nähe der Deckelschließstellung die Deckelvorderkante seitlich im Wesentlichen eine reine Verschiebebewegung ausführt. Dabei kann ferner dafür gesorgt sein, dass im Zuge eines Öffnungsvorgangs in Dachmitte die Bewegung der Deckelvorderkante auch in unmittelbarer Nähe der Deckelschließstellung schräg nach hinten oben verläuft, weil wegen der Dachkrümmung die Deckelmitte höher steht. Der erfindungsgemäße Aufbau der Ausstell- und Verschiebemechanik eröffnet in dieser Beziehung jedoch vielfältige Variationsmöglichkeiten.

Während Ausstellbewegungen des Deckels wird das zweite Gleitelement unter dem Einfluss von Verstellbewegungen des Koppelglieds und gegebenenfalls von Verstellbewegungen des ersten Gleitelements entlang einer dachfesten Führungsbahn bevorzugt derart verstellt, dass der Deckelausstellbewegung eine begrenzte Deckelverschiebebewegung überlagert wird.

Der Deckel ist in ausgestelltem Zustand mit dem Steuerschlitten über das Koppelglied für Verschiebebewegungen in Dachlängsrichtung vorzugsweise verriegelbar. Dabei weist die Kulissenbahn der das Koppelglied mit dem Steuerschlitten verbindenden Kulissenanordnung vorteilhaft einen Bahnabschnitt auf, der im Verriegelungszustand den Gleiter dieser Kulissenanordnung an Bewegungen in Dachlängsrichtung hindert, während die dachfeste Führung mit einer Anordnung versehen ist, die mit dem zweiten Gleitelement zusammenwirkt, um den Gleiter bei Verschiebebewegungen des ausgestellten Deckels in verriegeltem Zustand zu halten.

Die dachfeste Führung kann in an sich bekannter Weise (DE 100 55 790 A1 ) einen nach hinten schräg ansteigenden Bahnabschnitt aufweisen, den das erste Gleitelement im Zuge von Schwenkbewegungen des Deckels durchläuft.

Für eine besonders stabile Abstützung des Deckels ist vorteilhaft die dachfeste Führung mit einer Führungsschiene mit im Wesentlichen U-förmigem Querschnitt versehen und ist der Steuerschlitten entlang von Steuerschlitten- Führungsbahnen verschiebbar geführt, die einander mit Abstand gegenüberliegen.

Die Kulissenbahn des Deckelträgers kann insbesondere von einer T-Führung gebildet sein.

Im Folgenden wird ein Ausführungsbeispiel der Erfindung anhand der beigefügten Zeichnungen näher erläutert. Es zeigen:
- Fig. 1: schematisch einen Teillängsschnitt eines Fahrzeugdaches bei in Schließstellung befindlichem Deckel,
- Fign. 2 bis 4: Teillängsschnitte entsprechend Fig. 1, die das Ausstellen des Deckels veranschaulichen,
- Fig. 5: einen Teillängsschnitt entsprechend Fig. 1, der das Fahrzeugdach bei voll ausgestelltem und bereits etwas in Öffnungsrichtung zurückgeschobenem Deckel darstellt, und
- Fig. 6: einen schematischen Querschnitt der Ausstell- und Verschiebemechanik gemäß den Figuren 1 bis 5.

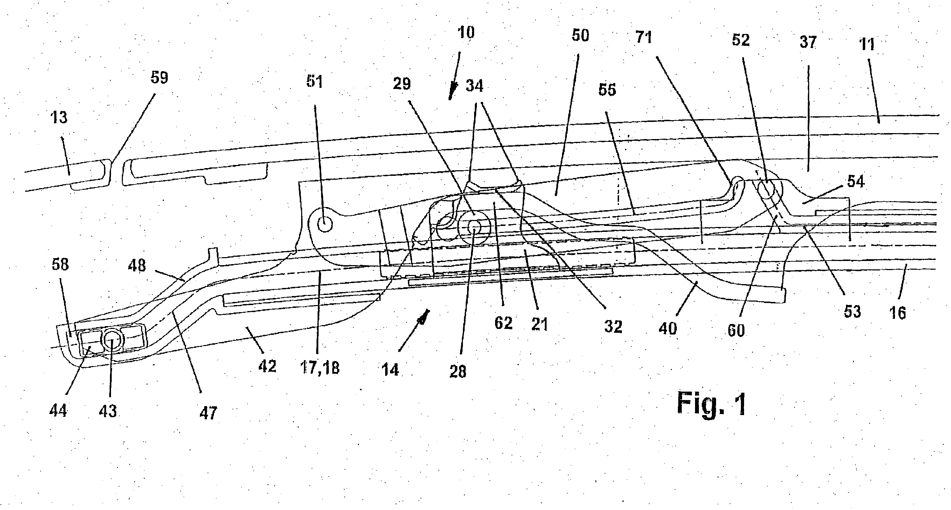

In Fig. 1 ist ein Teillängsschnitt eines insgesamt mit 10 bezeichneten Fahrzeug-Spoilerdaches dargestellt, das einen Deckel 11 zum wahlweisen Verschließen oder Freilegen einer Dachöffnung 12 aufweist, die in einer festen Dachhaut 13 ausgebildet ist. Die für das Ausstellen und Verschieben des Deckels 11 erforderliche Mechanik ist an beiden Seiten des Deckels 11 gleichartig aufgebaut. Daher ist nachstehend lediglich die der einen Deckelseite zugeordnete Mechanik anhand der Zeichnungen näher erläutert.

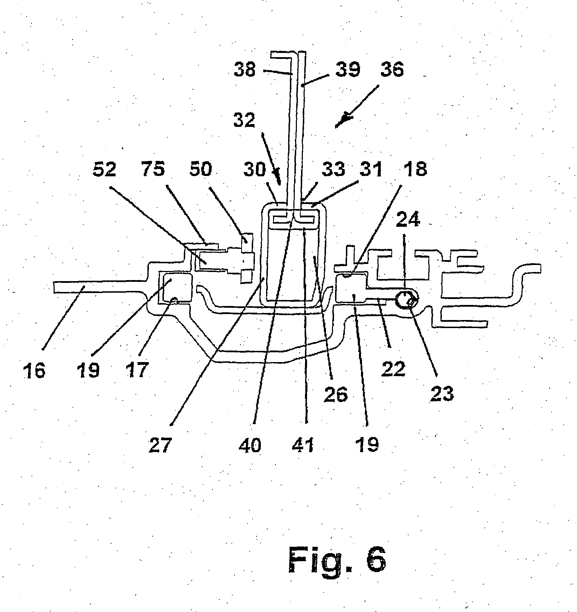

Zu der gezeigten Ausstell- und Verschiebemechanik 14 für den Deckel 11 gehört eine dachfest angeordnete Führung 15 mit einer Führungsschiene 16, die als Profilteil mit Führungsbahnen ausgebildet ist, die in der mit der Fahrzeuglängsrichtung übereinstimmenden Deckelverschieberichtung verlaufen. In zwei dieser Führungsbahnen, die in Fig. 6 mit 17 und 18 bezeichnet sind, die einander mit Abstand gegenüberliegen und die an ihren einander zugewendeten Seiten offen sind, sind Gleitbacken 19 eines Steuerschlittens 21 längsverschiebbar geführt. Der Steuerschlitten 21 ist über ein Koppelglied 22 mit einem in einer weiteren Führungsbahn 23 der Führungsschiene 16 längsverschiebbar geführten Antriebskabel 24 fest verbunden. Bei dem Antriebskabel 24 kann es sich beispielsweise um ein drucksteifes Gewindekabel handeln, das mit einem Antriebsritzel eines nicht dargestellten Antriebsmotors in Eingriff steht. Der Steuerschlitten 21 weist einen hohlen Schlittenkörper 26 auf. Ein mit Längsseitenwänden 27 des Schlittenkörpers 26 fest verbundener Lagerbolzen 28 erstreckt sich quer durch den hohlen Schlittenkörper 26 hindurch. Auf dem Lagerbolzen 28 ist in dem Schlittenkörper 26 eine Anlagerolle 29 drehbar gelagert. Die Oberseite des Schlittenkörpers 26 weist Wandabschnitte 30, 31 auf, die oben an die Längsseitenwände 27 anschließen und die einen Führungsabschnitt 32 des Steuerschlittens 21 bilden. Die einander zugewendeten freien Längskanten der Wandabschnitte 30, 31 begrenzen einen Längsschlitz 33, und die Wandabschnitte 30, 31 sind vorne und hinten schräg hochgebogen, wie dies beispielsweise in Fig. 1 bei 34 zu erkennen ist.

Der Steuerschlitten 21 wirkt entsprechend den Figuren 1 bis 5 mit einer T-Führung 36 in Form eines umgekehrt T-förmigen Kulissenabschnitts eines sich in Fahrzeuglängsrichtung unter dem Deckel 11 erstreckenden Deckelträgers 37 zusammen, der mit dem Deckel 11 an der betreffenden Deckelseite fest verbundenen, zum Beispiel verschraubt, ist. An der anderen Deckelseite befindet sich ein entsprechender Deckelträger. Die T-Führung 36 weist im veranschaulichten Ausführungsbeispiel zwei im wesentlichen lotrecht stehende, flächig miteinander verbundene Blechteile 38, 39 auf, deren untere Enden in voneinander wegweisender Richtung umgebogen und zur Bildung einer Kulissenbahn 40 mit gut gleitfähigem Kunststoff 41 umspritzt sind. Der Führungsabschnitt 32 des Schlittenkörpers 26 steht mit der Oberseite der Kulissenbahn 40 in Gleiteingriff, während sich die Anlagerolle 29 gegen die Unterseite der Kulissenbahn 40 legt. Durch das Hochbiegen der Enden 34 der Wandabschnitte 30, 31 ist einem gegenseitigen Verhaken von Kulissenbahn 40 und Schlittenkörper 26 vorgebeugt.

Der Deckelträger 37 weist ferner eine nach vorne vorspringende, von der Deckelunterseite in Abstand liegende Nase 42 auf, die einen Gleitschuh 44 trägt. Der Gleitschuh 44 ist um eine im Wesentlichen waagrecht verlaufende Deckelschwenkachse 43 schwenkbar gelagert. Die Achse 43 liegt in Abstand von der Unterseite des Deckels 11 und ist in Fahrzeuglängsrichtung mit dessen Vorderkante 45 mindestens näherungsweise ausgerichtet. Der Gleitschuh 44 sitzt längsverschiebbar je nach Deckelstellung in mindestens einer der Führungsbahnen 17, 18 der Führungsschiene 16 oder in einer Führungsbahn 47, die an das vordere Ende der Führungsbahnen 17 und/oder 18 anschließt und die in einem einen Teil der dachfesten Führung 15 bildenden, mit der Führungsschiene 16 fest verbundenen Ansatzstück 48 ausgebildet ist. Mittels des Deckelträgers 37 ist damit der Deckel 11 in seinem vorderen Bereich an zwei in Deckelverschieberichtung in Abstand voneinander liegenden Stellen gegenüber der dachfesten Führung (Führungsschiene 16 und deren Ansatzstück 48) abgestützt, und zwar zum einen unmittelbar über den vorderen Gleitschuh 44 und zum anderen mittelbar über den Steuerschlitten 21.

An dem Deckelträger 37 ist ein sich in Deckelverschiebrichtung erstreckender Verriegelungshebel 50 an seinem vorderen Ende über einen Lagerzapfen 51 in einer im Wesentlichen lotrechten Ebene drehbar gelagert. Der Lagerzapfen 51 sitzt in Deckelverschiebrichtung zwischen der Deckelschwenkachse 43 und dem vorderen Ende des Kulissenabschnitts 36. Der Verriegelungshebel 50 trägt an seinem hinteren, in Deckelverschiebrichtung nahe dem hinteren Ende des Kulissenabschnitts 36 liegenden Ende einen Gleiter 52, der in einer dachfesten Kulissenbahn 53 geführt ist, wenn der Deckel im Bereich seiner vorderen Endstellung steht. Die Kulissenbahn 53 ist bei dem veranschaulichten Ausführungsbeispiel in einem bezüglich der Führungsschiene 16 fixierten Kulissenblock 54 ausgebildet. Der Verriegelungshebel 50 ist seinerseits mit einer langgestreckten Kulissenbahn 55 versehen, in welche der mit dem Steuerschlitten 21 fest verbundene Lagerbolzen 28 nach Art eines Kulissengleiters eingreift, um die Schwenkbewegung des Verriegelungshebels 50 gegenüber dem Deckelträger 37 zu steuern.

Fig.1 zeigt die Ausstell- und Verschiebemechanik 14 bei in Schließstellung befindlichem Deckel 11. Der Gleitschuh 44 befindet sich, in Quer- und Hochrichtung geführt, in einem im Wesentlichen horizontal verlaufenden Segment 58 der von dem Ansatzstück 48 bestimmten Führungsbahn 47. Er liegt dabei mindestens näherungsweise unterhalb des vorderen Randes 59 der Dachöffnung 12. Der Lagerbolzen 28 befindet sich nahe dem vorderen Ende der Kulissenbahn 55 des Verriegelungshebels 50. Er hält den Verriegelungshebel 50 in einer Stellung, in welcher der am hinteren Ende des Verriegelungshebels 50 angeordnete Gleiter 52 am oberen Ende eines steil nach oben und vorne geneigten Bahnabschnitts 60 der dachfesten Kulissenbahn 53 steht. Der Führungsabschnitt 32 und die Anlagerolle 29 stehen mit einem vorderen hochliegenden und im Wesentlichen horizontal verlaufenden Bahnabschnitt 62 der Kulissenbahn 40 in Eingriff, wodurch der Deckel 11 nach unten gezogen wird.

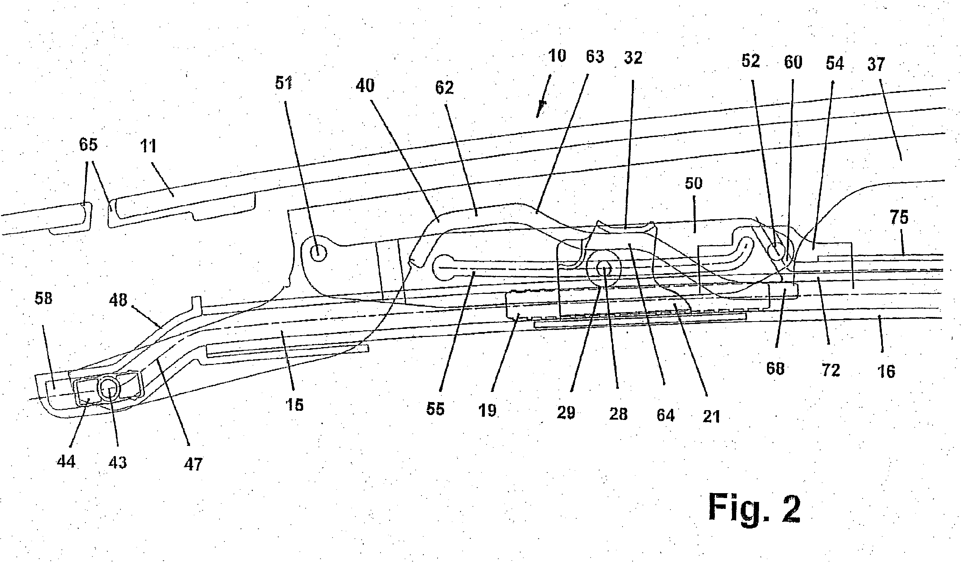

Um den Deckel 11 mit seiner Hinterkante über die Dachhaut 13 auszustellen, wird die Ausstell- und Verschiebemechanik 14 in die in Fig. 2 veranschaulichte Stellung gebracht. Dabei wird der Steuerschlitten 21 über das Antriebskabel 24 entlang der Führungsschiene 16 nach hinten geschoben. Der Führungsabschnitt 32 und die Anlagerolle 29 bewegen sich entlang einem schräg nach hinten abfallenden Bahnabschnitt 63 der Kulissenbahn 40 zu einem wieder im Wesentlichen horizontalen Bahnabschnitt 64 der Kulissenbahn 40, wodurch der Deckelträger 37 und somit Deckel 11 nach oben gedrückt werden. Während dieser Bewegung des Deckelträgers 37 wird durch das Zusammenwirken des Lagerbolzens 28 mit der schräg nach hinten abfallenden Kulissenbahn 55 der Verriegelungshebel 50 um den Lagerzapfen 51 in den Figuren 1 und 2 im Uhrzeigersinn verschwenkt. Dadurch verschiebt sich der Gleiter 52 in dem steilen Bahnabschnitt 60 des dachfesten Kulissenblocks 54 um ein kurzes Stück nach unten. Auf diese Weise wird der Deckel 11 um einen geringen Betrag nach hinten verschoben, der gerade ausreicht, um ein Quetschen der Dichtungsanordnung 65 im Bereich des vorderen Randes 59 der Dachöffnung zu vermeiden. Der Deckel 11 führt beim Übergang von seiner Schließstellung gemäß Fig. 1 in die ausgestellte Lage gemäß Fig. 2 im Wesentlichen eine Schwenkbewegung um die weiterhin in dem Segment 58 Deckelschwenkachse 43 der Führungsbahn 47 befindliche Deckelschwenkachse 43 aus.

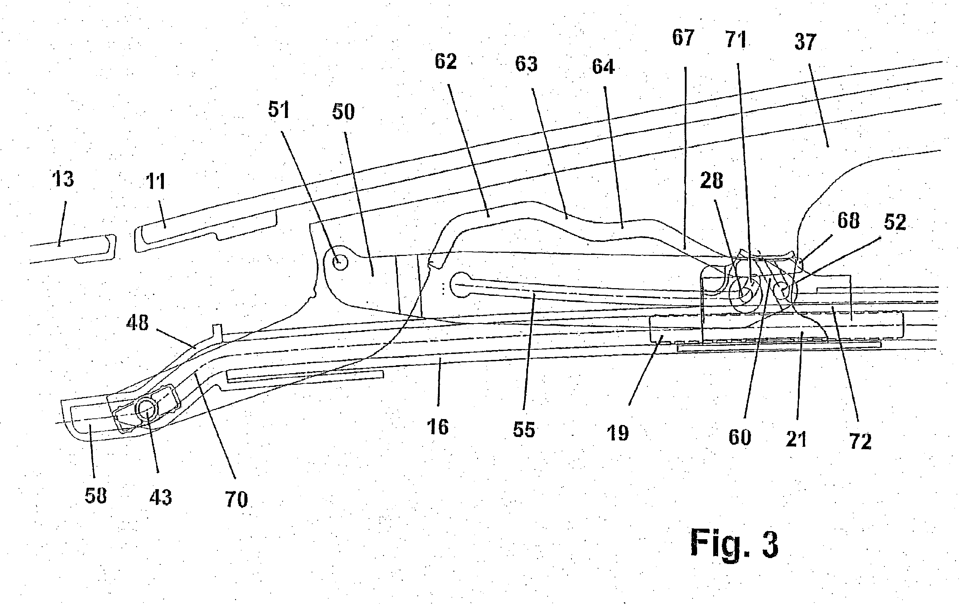

Bei weiterem Verstellen des Steuerschlittens 21 nach hinten werden entsprechend Fig. 3 der Führungsabschnitt 32 und die Anlagerolle 29 entlang einem schräg nach hinten abfallenden Bahnabschnitt 67 der Kulissenbahn 40 zu einem Bahnabschnitt 68 der Kulissenbahn 40 bewegt, der im Wesentlichen parallel zu dem Bahnabschnitt 64 verläuft. Der Deckelträger 37 wird weiter angehoben. Der mit dem Steuerschlitten 21 verbundene Lagerbolzen 28 gelangt an das untere Ende eines nach hinten steil ansteigenden Bahnabschnitts 71 der Kulissenbahn 55 des Verriegelungshebels 50. Dabei wird der Verriegelungshebel 50 im Bereich des Lagerbolzens 28 etwas angehoben, während gleichzeitig aber auch der Lagerzapfen 51 nach oben verstellt wird. Dadurch wird der Gleiter 52 in eine Stellung nahe dem unteren Ende des Bahnabschnitts 60 des Kulissenblocks 54 gebracht, was nur eine geringfügige weitere Verlagerung des Deckels 11 nach hinten in eine Lage gestattet, in welcher die Deckelschwenkachse 43 den Übergang von dem Bahnabschnitt 58 zu einem nach hinten schräg ansteigenden Bahnabschnitt 70 der Führungsbahn 47 erreicht. Der Deckel 11 wird mit seiner Hinterkante weiter ausgestellt.

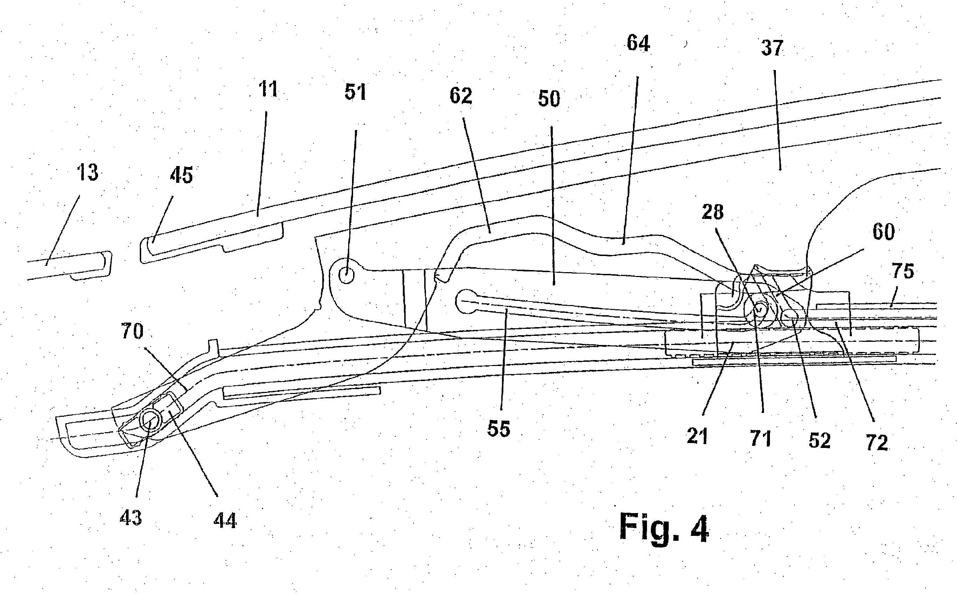

Fig. 4 zeigt die Ausstell- und Verschiebemechanik 15 in einer Stellung, in welcher-kurz nach Durchlaufen der Stellung gemäß Fig. 3 - die Deckelschwenkachse 43 in den Bahnabschnitt 70 der Führungsbahn 47 übergetreten ist. Durch Hochlaufen des Gleitschuhes 40 entlang dem Bahnabschnitt 70 wird die Deckelvorderkante angehoben. In der Stellung gemäß Fig. 4 legt sich der Lagerbolzen 28 in den steilen Bahnabschnitt 71 der in dem Verriegelungshebel 50 ausgebildeten Kulissenbahn 55 ein. Er verriegelt so den -Steuerschlitten 21 über den Verriegelungshebel 50 mit dem Deckelträger 37 für Bewegungen in Deckelverschiebrichtung. Der Gleiter 52 ist jetzt von dem Bahnabschnitt 60 der Kulissenbahn 53 des Kulissenblocks 54 für eine Verstellbewegung nach hinten in einem in Deckelverschiebrichtung verlaufenden Bahnabschnitt 72 der Kulissenbahn 53 freigekommen. Er wird von dem Bahnabschnitt 72 und daran nach hinten anschließend von einem nach unten offenen Steg 75 der Führungsschiene 16 an einem Ausweichen nach oben gehindert. Auf diese Weise wird der Verriegelungshebel 50 in der Verriegelungsstellung gehalten, in welcher der Lagerbolzen 28 mit dem Bahnabschnitt 71 der Kulissenbahn 55 in Eingriff steht.

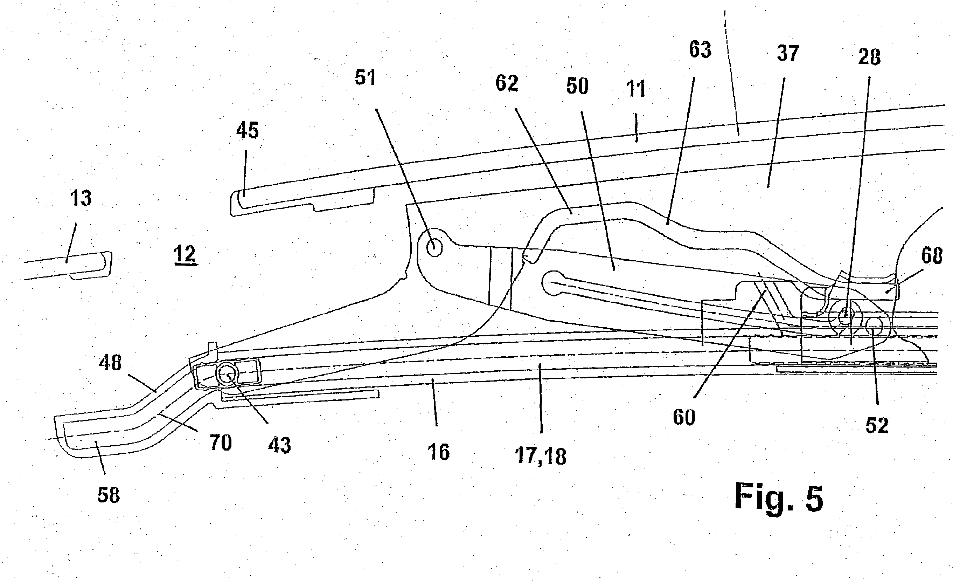

Wird der Steuerschlitten 21 über das Antriebskabel 24 gemäß Fig. 5 weiter nach hinten geschoben, wird die Deckelschwenkachse 43 in dem Bahnabschnitt 70 nach oben verstellt, und der Gleitschuh 44 tritt dann in die Führungsbahn(en) 17 und/oder 18 der Führungsschiene 16 ein. Der Deckel wird über den Verriegelungshebel 50 und den Deckelträger in Öffnungsrichtung (das heißt in Fig. 5 nach hinten) mitgenommen, und seine Vorderkante 45 wird entsprechend dem Anheben der Deckelschwenkachse 43 weiter nach oben verlagert. Im Vergleich zu Fig. 1 hat sich dabei der Abstand zwischen der Deckelschwenkachse 43 und der Abstützung des Deckels 11 über den Steuerschlitten 21 um nahezu die Länge der Kulissenbahn 55 vergrößert, was zur Stabilität des Spoilerdaches beiträgt.

Wird ausgehend von einer Offenstellung des Spoilerdaches 10 der Steuerschlitten 21 in Deckelschließrichtung verstellt, bleibt - durch das Zusammenwirken des Gleiters 52 mit dem Steg 75 und dem Bahnabschnitt 72 der Kulissenbahn 53 - der Steuerschlitten 21 mit dem Deckel 11 verriegelt, bis der Gleiter 52 das untere Ende des Bahnabschnittes 60 erreicht. Durch Hochsteigen des Gleiters 52 in dem Bahnabschnitt 60 wird dann die geschilderte Verriegelung gelöst. Der Steuerschlitten 21 kann sich dann wieder in Deckelverschieberichtung relativ zu dem Deckel 11 bewegen. Der Deckel 11 kann durch Verstellen des Steuerschlittens 21 in die Schließstellung gemäß Fig. 1 verschwenkt werden.

Im Rahmen der Erfindung verstehen sich zahlreiche Abwandlungen. Unter anderem kann das Fahrzeugdach mit mehreren Dachelementen, zum Beispiel Deckeln, versehen sein, die fest oder verstellbar sein können. Insbesondere eignet sich der erläuterte Aufbau auch für Doppel- und Mehrspoilerdächer. Der beschriebene Deckelträger mit T-Führung bietet hohe Stabilität verbunden mit besonders niedriger Bauhöhe. Stattdessen kann aber grundsätzlich auch ein Deckelträger vorgesehen sein, der in üblicher Weise mit einem dem Verlauf der T-Führung mehr oder weniger entsprechenden Kulissenschlitz ausgestattet ist. Weil bei dem gezeigten Ausführungsbeispiel die Führungsbahn 47 und die Kulissenbahn 53 in Ansatzbauteilen der Führungsschiene 16, nämlich dem Ansatzstück 48 und dem Kulissenblock 54 ausgebildet sind, kann die Führungsschiene 16 selbst als einfaches Profilbauteil ausgebildet sein. Grundsätzlich können aber die Führungsbahn 47 und/oder die Kulissenbahn 53 auch in Führungsteilen vorgesehen werden, die mit der Führungsschiene einstückig verbunden sind.

### Bezugszeichenliste

- 10: Spoilerdach
- 11: Deckel
- 12: Dachöffnung
- 13: Dachhaut
- 14: Ausstell-Verschiebemechanik
- 15: dachfeste Führung
- 16: Führungsschiene
- 17, 18: Führungsbahn von 16
- 19: Gleitbacken
- 21: Steuerschlitten
- 22: Koppelglied
- 23: Führungsbahn von 16
- 24: Antriebskabel
- 26: Schlittenkörper
- 27: Längsseitenwand von 26
- 28: Lagerbolzen
- 29: Anlagerolle
- 30, 31: Wandabschnitt von 26
- 32: Führungsabschnitt
- 33: Längsschlitz
- 34: Ende von 30, 31
- 36: T-Führung
- 37: Deckelträger
und
- 38, 39: Blechteil
- 40: Kulissenbahn von 37
- 41: Umspritzung von 40
- 42: Nase von 37
- 43: Deckelschwenkachse
- 44: Gleitschuh
- 45: Deckelvorderkante
- 47: Führungsbahn von 48
- 48: Ansatzstück
- 50: Verriegelungshebel
- 51: Lagerzapfen
- 52: Gleiter
- 53: Kulissenbahn von 54
- 54: Kulissenblock
- 55: Kulissenbahn von 50
- 58: Segment von 47
- 59: vorderer Rand von 12
- 60: Bahnabschnitt von 53
- 62, 63, 64: Bahnabschnitt von 40
- 65: Dichtungsanordnung
- 67, 68: Bahnabschnitt von 40
- 71: Bahnabschnitt von 55
- 72: Bahnabschnitt von 53
- 75: Steg

## Patentansprüche

1. Als Spoilerdach ausgebildetes öffnungsfähiges Fahrzeugdach mit mindestens einem Deckelträger (37) für einen Deckel (11), der mittels einer Ausstell- und Verschiebemechanik (14) aus einer Schließstellung, in der er eine Dachöffnung (12) verschließt, mit seiner Hinterkante durch Schwenken des Deckels ausstellbar und zum Freilegen der Dachöffnung in ausgestelltem Zustand in Dachlängsrichtung nach hinten verschiebbar ist, wobei der Deckelträger (37) mittels eines ersten Gleitelements (Gleitschuh 44) und eines zweiten Gleitelements (Gleiter 52), die in Dachlängsrichtung in Abstand voneinander angeordnet sind, entlang einer dachfesten Führung (15) in Dachlängsrichtung verschiebbar geführt und mit einer Kulissenbahn (40) versehen ist, mit der ein gleichfalls entlang der dachfesten Führung (15) in Dachlängsrichtung verschiebbar geführter Steuerschlitten (21) in Eingriff steht, **dadurch gekennzeichnet, dass** das zweite Gleitelement (Gleiter 52) mit dem Deckelträger (37) über ein Koppelglied (Verriegelungshebel 50) verbunden ist, das an dem Deckelträger angelenkt ist, und dass mindestens während Schwenkbewegungen des Deckels das zweite Gleitelement über das Koppelglied in Abhängigkeit von der Bewegung des Steuerschlittens (21) verstellbar ist.

2. Fahrzeugdach nach Anspruch 1, **dadurch gekennzeichnet, dass** das Koppelglied (Verriegelungshebel 50) mit dem Steuerschlitten (21) über eine Kulissenanordnung (Kulissenbahn 55, Lagerbolzen 28) in Wirkverbindung steht.

3. Fahrzeugdach nach Anspruch 1 oder 2, **dadurch gekennzeichnet, dass** die Anlenkstelle (Lagerzapfen 51) des Koppelglieds (Verriegelungshebel 50) an dem Deckelträger (37) und das zweite Gleitelement (Gleiter 52) an gegenüberliegenden Längsenden des Koppelglieds angeordnet sind.

4. Fahrzeugdach nach Anspruch 2 oder 3, **dadurch gekennzeichnet, dass** die Kulissenanordnung eine in Längsrichtung des Köppelglieds (Verriegelungshebel 50) verlaufende Kulissenbahn (55) und einen mit dieser Kulissenbahn (55) zusammenwirkenden Gleiter (Lagerbolzen 28) aufweist, der mit dem Steuerschlitten (21) fest verbunden ist.

5. Fahrzeugdach nach Anspruch 4, **dadurch gekennzeichnet, dass** der einen Teil der Kulissenanordnung bildende Gleiter (Lagerbolzen 28) zugleich Teil einer Anordnung (Lagerbolzen 28, Anlagerolle 29, Führungsabschnitt 32) ist, über welche der Steuerschlitten (21) mit der Kulissenbahn (40) des Deckelträgers (37) in Eingriff steht.

6. Fahrzeugdach nach einem der vorhergehenden Ansprüche, **dadurch gekennzeichnet, dass** die Ausstell- und Verschiebemechanik (14) so ausgelegt ist, dass in unmittelbarer Nähe der Deckelschließstellung die Deckelvorderkante (45) seitlich im wesentlichen eine reine Verschiebebewegung ausführt.

7. Fahrzeugdach nach einem der vorhergehenden Ansprüche, **dadurch gekennzeichnet, dass** während Ausstellbewegungen des Deckels (11) das zweite Gleitelement (Gleiter 52) unter dem Einfluss von Verstellbewegungen des Koppelglieds (Verriegelungshebel 50) und gegebenenfalls von Verstellbewegungen des ersten Gleitelements (Gleitschuh 44) entlang einer dachfesten Führungsbahn (Bahnabschnitt 60) derart verstellt wird, dass der Deckelausstellbewegung eine begrenzte Deckelverschiebebewegung überlagert wird.

8. Fahrzeugdach nach einem der vorhergehenden Ansprüche, **dadurch gekennzeichnet, dass** der Deckel (11) in ausgestelltem Zustand mit dem Steuerschlitten (21) über das Koppelglied (Verriegelungshebel 50) für Verschiebebewegungen in Dachlängsrichtung verriegelbar ist.

9. Fahrzeugdach nach den vorhergehenden Ansprüchen, **dadurch gekennzeichnet, dass** die Kulissenbahn (55) der das Koppelglied (Verriegelungshebel 50) mit dem Steuerschlitten (21) verbindenden Kulissenanordnung einen Bahnabschnitt (71) aufweist, der im Verriegelungszustand den Gleiter (Lagerbolzen 28) dieser Kulissenanordnung an Bewegungen in Dachlängsrichtung hindert, und dass die dachfeste Führung (15) mit einer Anordnung (Bahnabschnitt 72, Steg 75) versehen ist, die mit dem zweiten Gleitelement (Gleiter 52) zusammenwirkt, um den Gleiter (Lagerbolzen 28) bei Verschiebebewegungen des ausgestellten Deckels (11) in verriegeltem Zustand zu halten.

10. Fahrzeugdach nach einem der vorhergehenden Ansprüche, **dadurch gekennzeichnet, dass** die dachfeste Führung (15) einen nach hinten schräg ansteigenden Bahnabschnitt (70) aufweist, den das erste Gleitelement (Gleitschuh 44) im Zuge von Schwenkbewegungen des Deckels (11) durchläuft.

11. Fahrzeugdach nach einem der vorhergehenden Ansprüche, **dadurch gekennzeichnet, dass** die dachfeste Führung (15) eine Führungsschiene (16) mit im Wesentlichen U-förmigem Querschnitt aufweist und der Steuerschlitten (21) entlang von Steuerschlitten- Führungsbahnen (17, 18) verschiebbar geführt ist, die einander mit Abstand gegenüberliegen.

12. Fahrzeugdach nach einem der vorhergehenden Ansprüche, **dadurch gekennzeichnet, dass** die Kulissenbahn (40) des Deckelträgers (37) von einer T-Führung (36) gebildet ist.
